(19) **Europäisches Patentamt**

**European Patent Office**

**Office européen des brevets**

(11) **EP 1 023 546 B1**

(12) **EUROPÄISCHE PATENTSCHRIFT**

(45) Veröffentlichungstag und Bekanntmachung des Hinweises auf die Patenterteilung:
**08.01.2003  Patentblatt 2003/02**

(51) Int Cl.⁷: $F16H\ 59/14$, $F16H\ 61/20$
  // $(B60K41/20,\ F16H59:66)$

(21) Anmeldenummer: **98955465.4**

(22) Anmeldetag: **16.10.1998**

(86) Internationale Anmeldenummer:
  **PCT/EP98/06564**

(87) Internationale Veröffentlichungsnummer:
  **WO 99/020921 (29.04.1999 Gazette 1999/17)**

(54) **VERFAHREN UND VORRICHTUNG ZUM ERMITTELN DES FAHRZEUGANTRIEBSMOMENTS BEIM ANFAHREN EINES FAHRZEUGS, ZUM ERMITTELN EINER EXTERN VERURSACHTEN, EIN FAHRZEUG ANTREIBENDEN ODER BREMSENDEN GRÖSSE SOWIE ZUM UNTERSTÜTZEN DES ANFAHRENS AM BERG**

METHOD AND DEVICE FOR DETECTING THE DRIVING TORQUE OF A VEHICLE DURING STARTING, FOR DETECTING AN EXTERNALLY CAUSED VARIABLE DRIVING OR BRAKING A VEHICLE AND FOR PROVIDING ASSISTANCE DURING CLIMBING

PROCEDE ET DISPOSITIF POUR DETERMINER LE COUPLE D'ENTRAINEMENT D'UN VEHICULE LORS DE SON DEMARRAGE, POUR DETERMINER UNE GRANDEUR, AYANT DES CAUSES EXTERNES, ENTRAINANT OU FREINANT UN VEHICULE, AINSI QUE POUR ASSISTER LE DEMARRAGE EN MONTAGNE

(84) Benannte Vertragsstaaten:
  **DE FR GB**

(30) Priorität: **17.10.1997  DE 19746061**
    **17.10.1997  DE 19746062**
    **22.01.1998  DE 19802217**

(43) Veröffentlichungstag der Anmeldung:
  **02.08.2000  Patentblatt 2000/31**

(73) Patentinhaber: **Continental Teves AG & Co. oHG**
  **60488 Frankfurt (DE)**

(72) Erfinder:
  • **ECKERT, Alfred**
    **D-55129 Mainz-Hechtsheim (DE)**
  • **DIEBOLD, Jürgen**
    **D-65760 Eschborn (DE)**
  • **BERTHOLD, Thomas**
    **D-64293 Darmstadt (DE)**

(56) Entgegenhaltungen:
  **EP-A- 0 492 199      DE-A- 4 328 893**
  **DE-A- 19 520 579      US-A- 5 658 213**
  **US-A- 5 669 851**

**Beschreibung**

Die vorliegende Erfindung betrifft ein Verfahren und eine Vorrichtung zum Ermitteln des Fahrzeugantriebsmoments beim Anfahren eines Fahrzeugs. Sie betrifft außerdem ein Verfahren und eine Vorrichtung zum Ermitteln einer extern verursachten, ein Fahrzeug antreibenden oder bremsenden Größe sowie zum Unterstützen des Anfahrens am Berg.

Beim Anfahren eines Fahrzeugs allgemein ändern sich die Motorbetriebsbedingungen u.a. dahingehend, daß der Motor übergeht vom Leerlaufverhalten (in dieser Anmeldung bedeutet Leerlauf nicht unbedingt die Leerlaufdrehzahl des Motors, aber immer den Lauf des Motors ohne Fahrzeug als Last) hin zum Normalbetrieb (belasteter Lauf), in dem der Motor das Fahrzeug antreibt, so daß die Motorausgangsleistung größtenteils und insbesondere definiert zum Antreiben des Fahrzeugs verwendet wird. Der Übergangszustand wird bei Schaltgetrieben mit der Kupplung gesteuert. Bei Automatikgetrieben wird der Zustandsübergang durch den Wandler aufgefangen. In allen Fällen ist jedoch während des Übergangs das für den eigentlichen Fahrzeugantrieb zur Verfügung stehende Drehmoment schwer zu bestimmen. Damit ist nicht genau bekannt, welcher Anteil des Motormoments für den Antrieb des Fahrzeugs zur Verfügung steht. Dies ist bei vielen Anwendungen nachteilhaft, beispielsweise bei Anfahrhilfen am Berg. Wenn ein Fahrzeug bergaufwärts anfährt, wirken im ersten Augenblick die Hangabtriebskraft als rücktreibendes Moment, während Bremskraft und Motormoment als haltende bzw. vorwärtstreibende Kraft wirken. Wenn eine Anfahrhilfe geschaffen werden soll, muß u.a. sichergestellt werden, daß unter keinen Umständen das Fahrzeug rückwärts rollt. Trotz der Tatsache, daß sich der Motor im obengenannten Übergangszustand befindet, muß dann bekannt sein, welche vorwärtstreibenden und welche rückwärtstreibenden Einflüsse vorliegen, damit geeignete Stellglieder, beispielsweise eine fremdsteurbare Fahrzeugbetriebsbremse (z.B. ein analog fremdsteuerbarer Vakuum- Bremskraftverstärker) und/oder eine fremdsteuerbare Parkbremse (z. B. eine elektrische Feststellbremse), geeignet beeinflußt werden können.

Die vorliegende Erfindung betrifft außerdem ein Verfahren und eine Vorrichtung zum Ermitteln einer extern verursachten, ein Fahrzeug antreibenden oder bremsenden Größe und insbesondere eines solchen Moments. Die Längsdynamik eines Fahrzeugs - Geschwindigkeit und Beschleunigung - wird durch verschiedene interne und externe Größen, insbesondere Momente, beeinflußt. Interne Größen/Momente im Sinne dieser Beschreibung sind beispielsweise das Motormoment, das Bremsmoment oder die Fahrwiderstände (die sich intern z. B. anhand von auf Erfahrungswerten basierenden Tabellen oder durch Konstanten oder durch Formeln, die den Fahrzeugbewegungszustand mit den Eigenschaften/Kennwerten des Fahrzeugs berücksichtigen, beschreiben lassen). Diese Größen lassen sich durch verschiedene Maßnahmen vergleichsweise genau ermitteln, so daß ihr Einfluß auf die Längsdynamik berücksichtigt werden kann. Daneben gibt es aber auch extern verursachte Größen, die sich insbesondere variabel zusätzlich zu den oben genannten (intern beschreibbaren) Fahrwiderständen ergeben. Hierzu zählt beispielsweise die Hangabtriebskraft, wenn ein Fahrzeug auf einer geneigten Fahrbahn fährt. Die Hangabtriebskraft führt zu einem Moment, das die Längsdynamik des Fahrzeugs beeinflußt. Das gleiche gilt beispielsweise für Windkräfte, außergewöhnliche Rollwiderstände oder ähnliches. Diese extern verursachten Größen lassen sich entweder gar nicht oder über herkömmliche Sensoren nur schwer ermitteln - in der Regel benötigt man aber zusätzliche Sensorik, die es einzusparen gilt.

Ein in der DE-A-195 20 579 offenbartes Verfahren zur Ermittlung des Fahrzeugantriebsdrehmoments beim Anfahren vergleicht ein Drehmoment, das aus einem Motor und Wandler Modell abgeleitet wurde, mit einem Ist-Drehmoment, das aus der Fahrzeugbeschleunigung abgeleitet wurde, um einen korrigierten Drehmomentwert zu berechnen. Eine Motortabelle wird korrigiert und diese Tabelle beinhaltet ein Leerlaufverhalten des Motors.

Aufgabe der Erfindung ist es demnach, ein Verfahren und eine Vorrichtung zum Ermitteln des Fahrzeugantriebsmoments beim Anfahren eines Fahrzeugs anzugeben.

Eine weitere Aufgabe der Erfindung ist es, ein Verfahren und eine Vorrichtung zum Ermitteln einer extern verursachten, ein Fahrzeug antreibenden oder bremsenden Größe, insbesondere eines solchen Moments, anzugeben.

Eine weitere Aufgabe der Erfindung ist es, ein Verfahren und eine Vorrichtung zum Unterstützen des Anfahrens am Berg anzugeben.

Diese Aufgaben werden mit den Merkmalen der unabhängigen Ansprüche gelöst. Abhängige Ansprüche sind auf bevorzugte Ausführungsformen der Erfindung gerichtet.

Das Fahrzeugantriebsmoment beim Anfahren eines Fahrzeugs wird dadurch bestimmt, daß das Leerlaufverhalten des Motors anhand eines Modells ermittelt wird und aussagekräftige Ausgangswerte dieses Modells mit tatsächlich gemessenen, entsprechenden Werten verglichen werden (Beobachterprinzip). Der Unterschied zwischen den Modellgrößen und den tatsächlich gemessenen Größen kann auf die Tatsache zurückgeführt werden, daß der Motor im Übergangszustand vom lastfreien Lauf zum belasteten Lauf eben nicht rein unbelastet läuft, sondern während des Übergangszustands einen Teil seiner Leistung (schon) an das Fahrzeug abgibt. Durch eine Bewertung von Modell- und Meßgröße läßt sich auf das im Übergangszustand wirkende Fahrzeugantriebsmoment schließen. In diesem Zusammenhang wird nochmals auf die anfängliche Definition des Begriffs "Leerlauf" verwiesen.

Die extern verursachten Größen und insbesondere Momente werden durch einen weiteren Beobachter ermittelt. Dieser Beobachter empfängt intern verursachte, ein Fahrzeug antreibende oder bremsende Größen, insbesondere Momente, ermittelt daraus, wie sich die Längsdynamik des Fahrzeugs entwickeln müßte, vergleicht dieses Ergebnis mit tatsächlich gemessenen Werten der Längsdynamik und schließt aus eventuellen Abweichungen auf extern verursachte, ein Fahrzeug antreibende oder bremsende Größen, insbesondere Momente.

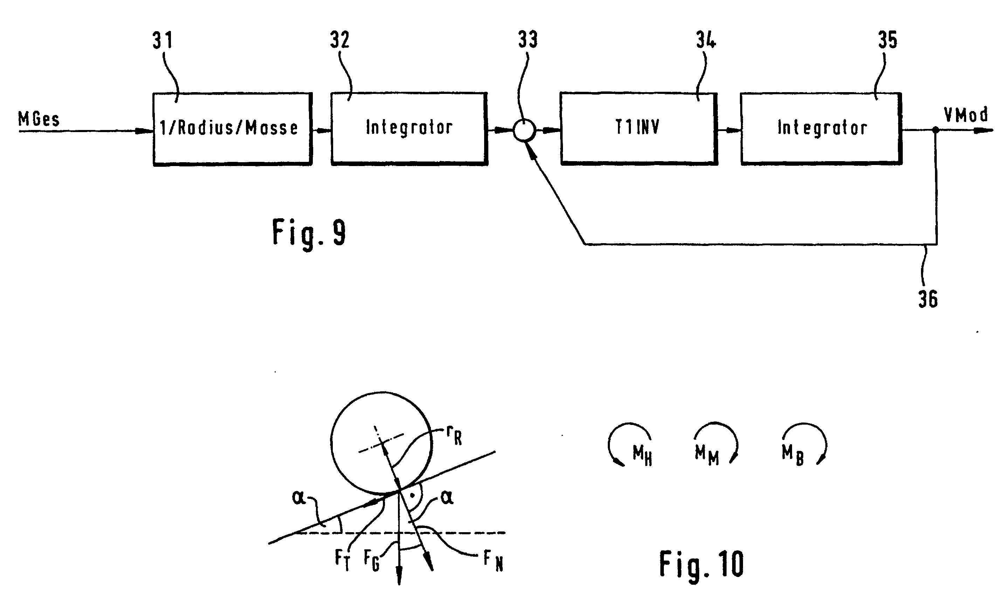

Die Kenntnis extern verursachter, ein Fahrzeug antreibende oder bremsende Größen, insbesondere solcher Momente, ist für verschiedene Anwendungen wünschenswert. Ein Beispiel für eine solche Anwendung wäre eine Anfahrhilfe am Berg. Anfahrhilfen am Berg sollen das komplizierte Handhaben von Bremse, Feststellbremse, Kupplung und Motor vereinfachen, wenn ein Fahrzeug bergauf anfährt. Gleichzeitig muß aber sichergestellt werden, daß unter keinen Umständen das Fahrzeug rückwärts rollt, um beispielsweise Kollisionen mit bergab stehenden Fahrzeugen zu vermeiden. Wenn ein Fahrzeug am Berg anfahren will, gelten in erster Näherung die in Fig. 10 schematisch dargestellten Gesetzmäßigkeiten. Die Gewichtskraft $F_G$ des Fahrzeugs kann in eine Normalkomponente $F_N$ und eine Tangentialkomponente $F_T$ am Reifen eines Einradmodells zerlegt werden. $F_T$ führt zusammen mit dem Reifenradius $r_R$ zu einem Hangabtriebsmoment $M_H$ gemäß der Formel

$$M_H = F_G \cdot \sin \alpha \cdot r_R$$

Hierbei ist $\alpha$ der Steigungswinkel. Das Hangabtriebsmoment $M_H$ würde ohne weitere Einflußmaßnahmen dazu führen, daß das Fahrzeug bergab rollt. Ihm entgegen wirken das haltende Bremsmoment $M_B$ und das beim Anfahren zusätzlich eingebrachte Motormoment $M_M$. Eine Anfahrhilfe am Berg kann beispielsweise das Bremsmoment $M_B$ beeinflussen. Die Beeinflussung muß aber so erfolgen, daß zu jedem Zeitpunkt sichergestellt ist, daß die Ungleichung

$$M_H < M_B + M_M$$

erfüllt ist. Nur dann wird ein Rückwärtsrollen des Fahrzeugs sicher vermieden. Um die obige Gleichung erfüllen zu können, ist die Kenntnis des Hangabtriebsmoments erforderlich.

Ähnliche Überlegungen wie die obigen gelten in dynamischen Situationen (Fahrzeuggeschwindigkeit ungleich Null). Bei langsamer Bergauffahrt im Stadtverkehr können beispielsweise Überlegungen wie die oben angesprochenen wichtig werden. Auch in solchen Fällen ist es wünschenswert, die extern verursachten, ein Fahrzeug antreibenden oder bremsenden Größen, insbesondere solche Momente, zu kennen, um das Fahrzeug geeignet beeinflussen zu können.

Nachfolgend werden bezugnehmend auf die Zeichnungen einzelne erfindungsgemäße Ausführungsformen beschrieben, es zeigen:

Fig. 1    eine erste erfindungsgemäße Ausführungsform zur Antriebsmomentbestimmung,

Fig. 2    beispielhaft ein Leerlaufmodell, das erfindungsgemäß verwendet werden kann,

Fig. 3    eine weitere erfindungsgemäße Ausführungsform zur Antriebsmomentbestimmung,

Fig. 4    ein beispielhaftes Kennfeld eines Wandlers,

Fig. 5    eine weitere erfindungsgemäße Ausführungsform zur Antriebsmomentbestimmung,

Fig. 6    eine schematische Darstellung der Momente in einem Fahrzeug mit Automatikgetriebe,

Fig. 7    ein Blockdiagramm einer erfindungsgemäßen Ausführungsform zur Bestimmung externer Momente,

Fig. 8    den Beobachter aus Fig. 7,

Fig. 9    beispielhaft ein Modell für die Fahrzeugdynamik,

Fig. 10   schematisch geltende physikalische Zusammenhänge in einer beispielhaften Anwendung, und

Fig. 11   schematisch eine erfindungsgemäßen Anfahrhilfe.

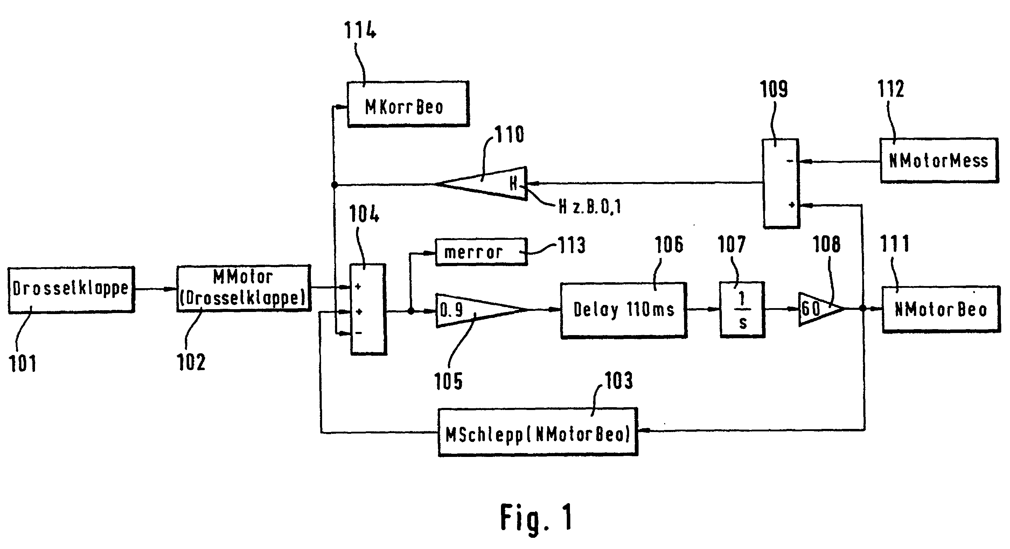

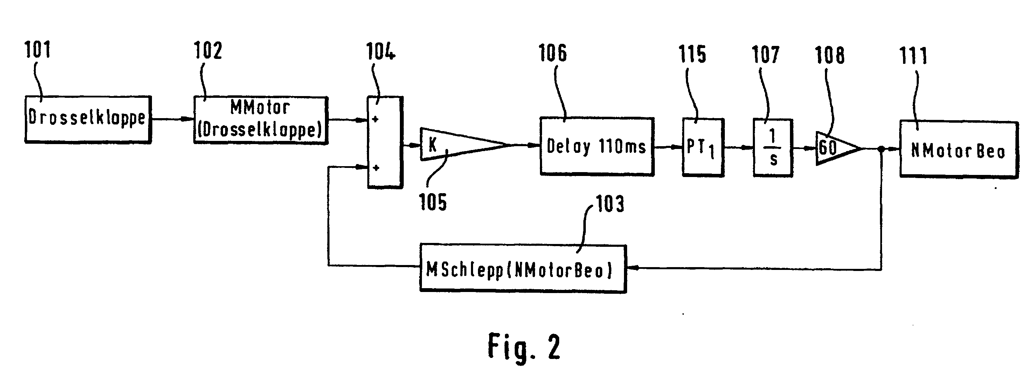

Bevor nachfolgend bezugnehmend auf Fig. 1 eine erste erfindungsgemäße Ausführungsform beschrieben wird, wird bezugnehmend auf Fig. 2 ein Beispiel eines Leerlaufmodells erläutert. Ein für die Erfindung geeignetes Leerlaufmodell muß folgende Forderungen erfüllen:

- Es muß geeignete Eingangs- und Ausgangsgrößen haben, und

- es muß das Leerlaufverhalten des Motors statisch wie dynamisch möglichst genau beschreiben, um für den Übergangszustand brauchbar zu sein.

Das in Fig. 2 gezeigte Leerlaufmodell erfüllt diese Forderungen. Es hat als Eingangsgröße ein Moment und liefert als Ausgangsgröße eine Schätz-Motordrehzahl NMotorBeo. Das Modell berücksichtigt dabei, daß dem eigentlichen, vom Motor abgegebenen Leerlaufmoment das intern im Motor wirkende Reibmoment, auch Schleppmoment genannt, entgegenwirkt. Dieses Gegeneinanderwirken wird im Addierer 104 nachgebildet. Das eigentliche Motorleerlaufmoment MMotor kann beispielsweise nach Maßgabe der Drosselklappenstellung anhand eines Kennfelds, einer Formel, eines Polygonzugs o.ä. ermittelt werden. Dieses Leerlaufmotormoment MMotor bildet einen Eingang des Addierers 104: Bezugsziffer 101 bezeichnet einen Drosselklappensensor bzw. einen Anschluß, an dem ein entsprechendes Signal vorliegt. Bezugsziffer 102 ist eine erste Ermittlungseinrichtung zum Ermitteln des Leerlaufmotormoments MMotor. Der Addierer 104 liefert an seinem Ausgang den Unterschied zwischen Leerlaufmoment und Schleppmoment. Wenn beide gleich sind und somit der Unterschied Null ist, läuft der Motor mit konstanter Drehzahl.

Die Dynamik des Motors wird durch die Baugruppen 106, 107 und 115 nachgebildet. 106 ist ein Verzögerungsglied, mit dem Totzeiten im Motor nachgebildet werden (beispielsweise die Zeitverzögerung zwischen Verändern des Drosselklappenwinkels und Veränderung der tatsächlich eingespritzten Benzinmenge im Zylinder), Baugruppe 115 ist ein Verzögerungsglied erster oder höherer Ordnung, mit dem allgemein Systemfolgeverzögerungen nachgebildet werden.

107 ist ein Integrierer, der das Signal an seinem Eingang integriert. Sein Ausgangssignal steigt, wenn sein Eingangssignal positiv ist (also wenn das Motormoment größer als das Schleppmoment ist), und es sinkt, wenn sein Eingangssignal negativ ist (also wenn das Schleppmoment größer als das Motormoment ist). Befinden sich beide im Gleichgewicht, ist das Eingangssignal am Integrator Null und sein Ausgangssignal konstant.

Die Komponenten 105 und 108 sind Konstanten, mit denen Motorkonstanten berücksichtigt und Umrechnungen vorgenommen werden können. Somit ergibt sich eine der Motordrehzahl entsprechende Größe NMotorBeo. Da das weiter oben erwähnte Motorschleppmoment MSchlepp primär von der Motordrehzahl abhängt, kann der Wert NMotorBeo als Eingangsgröße für eine Ermittlungseinrichtung 103 zur Ermittlung des Motorschleppmoments dienen. Die Ermittlungseinrichtung 103 kann ein Kennfeld sein, eine Formel, ein Polygonzug oder ähnliches.

Somit erhält man ein Leerlaufmodell für einen Motor, das als Eingangsgrößen das Gesamtmoment und als Ausgangsgröße die Motordrehzahl hat. Je nach erforderlicher bzw. gewünschter Genauigkeit des Modells sind die zur Nachbildung der Dynamik notwendigen Komponenten vorzusehen, und insbesondere die Komponenten 106 und 115 sind vorteilhaft, aber nicht zwingend notwendig.

Bezugnehmend auf Fig. 1 wird nun eine erste erfindungsgemäße Ausführungsform beschrieben. Fig. 1 zeigt eine Vorrichtung zum Ermitteln des Fahrzeugantriebsmoments, die auf dem Prinzip eines Beobachters basiert. Der Gedanke dabei ist folgender: Mit dem weiter oben beschriebenen Leerlaufmodell wird die "theoretische" Leerlaufdrehzahl ermittelt. Sie wird mit der gemessenen tatsächlichen Motordrehzahl verglichen. Ein Unterschied ergibt sich insbesondere während der eingangs beschriebenen Übergangszustände deshalb, weil der Motor nicht ausschließlich im Leerlauf läuft, sondern schon teilweise dem Antrieb des Fahrzeugs dient. Aus dem Vergleich von geschätzter und gemessener Motordrehzahl kann deshalb auf das dem Fahrzeugantrieb dienende Fahrzeugantriebsmoment geschlossen werden.

In Fig. 1 ist im unteren Teil das schon anhand von Fig. 2 beschriebene Leerlaufmodell zu sehen. Die Schätz-Motordrehzahl NMotorBeo wird mit der gemessenen Ist-Motordrehzahl NMotorMess verglichen. Insbesondere wird im Subtraktionsglied 109 die Differenz zwischen beiden gebildet. Nach einer Kalibrierung 110 (wobei unter Kalibrierung in dieser Anmeldung eine proportionale Umrechnung z. B. zum Zwecke der Werteanpassung, Umrechnung oder Normierung verstanden wird) kann dieser Wert als direktes Maß für das Antriebsmoment des Fahrzeugs MKorrBeo verwendet werden. Darüber hinaus wird dieses Moment, da es tatsächlich nicht zur Beschleunigung des Motors zur Verfügung steht, am Summationspunkt 104 gegengekoppelt, um das Leerlaufmodell wieder stabil zu machen.

Das Verzögerungsglied 106 stellt eine Verzögerung zwischen 50 und 150 ms, vorzugsweise zwischen 100 und 120 ms ein. Bezugsziffer 112 bezeichnet eine Einrichtung zum Ermitteln der Ist-Motordrehzahl NMotorMess. Im einfachsten Fall kann es sich hierbei um einen Sensor handeln, der ein analoges oder digitales Signal ausgibt. Es können sich daran aber auch komplexere Filterfunktionen anschließen. Schließlich kann es sich bei der Einrichtung 112 auch um die Anzapfung eines Datenbusses handeln, auf dem entsprechende Meßwerte vorhanden sind. Die Kalibrierung 108 kann beispielsweise die Umrechnung von Umdrehungen pro Sekunde auf Umdrehungen pro Minute vornehmen. Demzufolge wäre sie ein Faktor 60. Die Kalibrierungen 105 und 109 dienen auch der Anpassung der Daten an die jeweils notwendigen Normierungen.

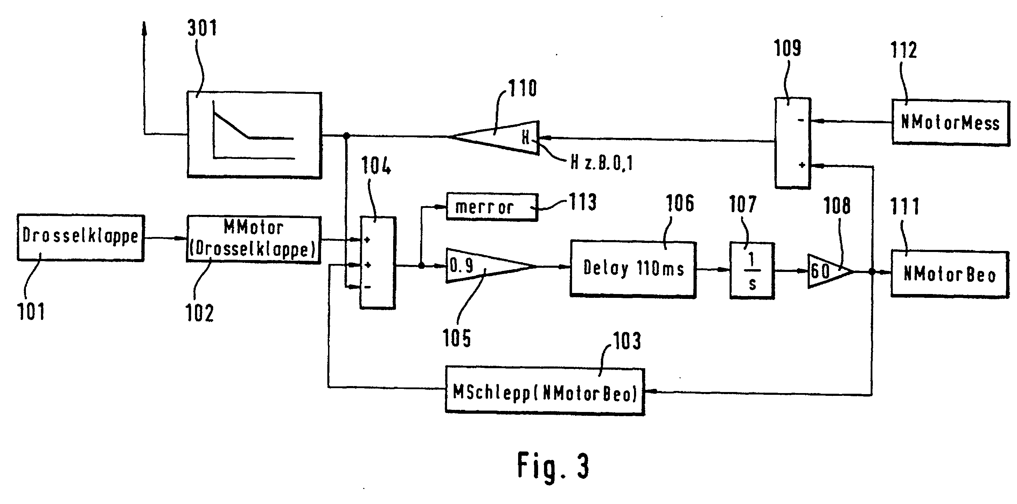

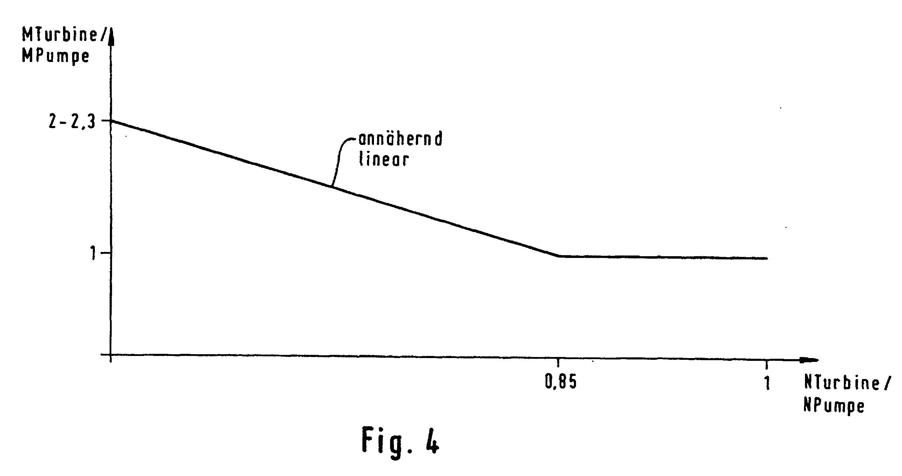

Fig. 3 zeigt eine weitere erfindungsgemäße Ausführungsform. Sie eignet sich für Fahrzeuge mit Automatikgetriebe, bei denen zwischen Getriebe und Motor ein Wandler vorgesehen ist. Da die Verhältnisse hinsichtlich Drehzahlen und Momenten in einem solchen Wandler komplexer sind als in einer Kupplung und insbesondere nichtlinear sein können, kann die Differenz zwischen Ist-Drehzahl NMotorMess und Schätz-Drehzahl NMotorBeo zwar direkt als Maß für das Fahrzeugantriebsmoment verwendet werden, es entstehen allerdings bessere Ergebnisse, wenn die Verhältnisse im Wandler selbst berücksichtigt werden. Dies erfolgt mittels eines wandlermodells 301, das beispielsweise eine Kennlinie wie in Fig. 4 qualitativ gezeigt nachbildet. Wie in der Ausführungsform nach Fig. 1 wird aus der Differenz zwischen Ist- und Schätz-Motordrehzahl auf einen Momenten-"Fehler" geschlossen, der am Summationspunkt 104 auch in das Leerlaufmodell rückgeführt wird. Aus dem Fehlermoment wird jedoch mittels des Wandlermodells 301 das eigentliche Fahrzeugantriebsmoment ermittelt. Dies kann unter Zuhilfenahme weiterer Größen erfolgen, beispielsweise mit der Drehzahlrate aus der Turbinendrehzahl, die aus der Getriebegesamtübersetzung aus den Raddrehzahlen ermittelt werden kann, und der Pumpendrehzahl, die aus der Motordrehzahl ermittelt werden kann. Das Fahrzeugantriebsmoment ergibt sich dann als Ausgang des Wandlermodells 301.

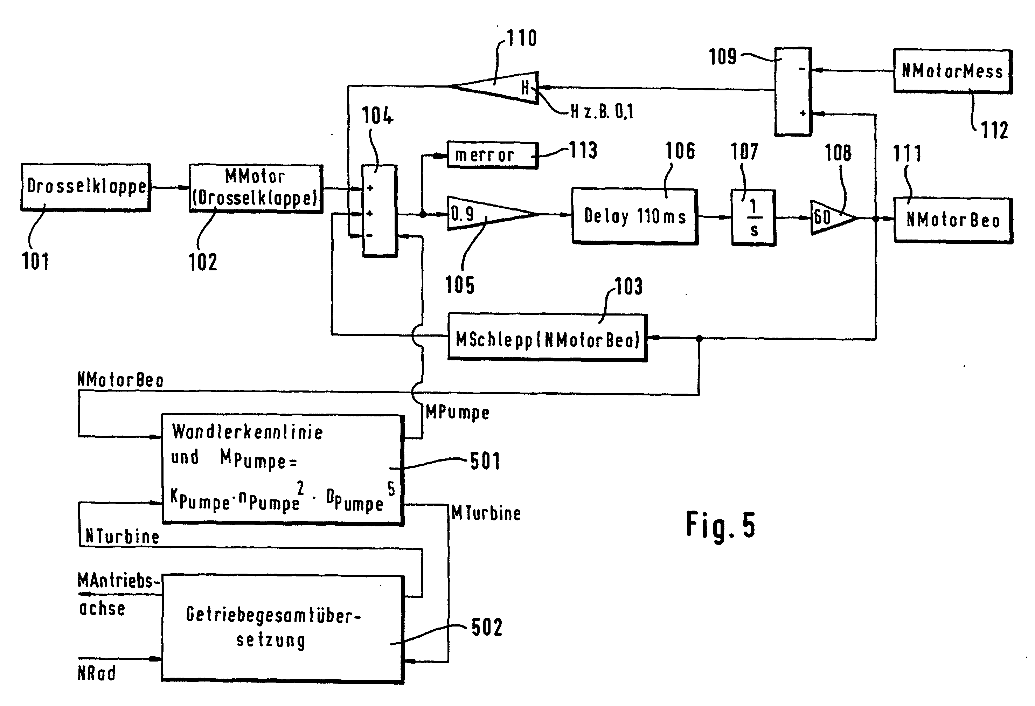

Eine weitere erfindungsgemäße Ausführungsform ist in Fig. 5 gezeigt. Sie unterscheidet sich von der Ausführungsform nach Fig. 3 dahingehend, daß mindestens ein Ausgang eines komplexeren Wandlermodells 501, 502 zur Verbesserung der Schätz-Motordrehzahl in Form einer Rückführung zum Leerlaufmodell verwendet wird und daß das Fahrzeugantriebsmoment nicht mehr direkt aus der Differenz zwischen Schätz-Motordrehzahl NMotorBeo und Ist-Motordrehzahl NMotorMess ermittelt wird, sondern vielmehr aus der aus dem Leerlaufmodell gewonnenen Schätz-Motordrehzahl NMotorBeo.

In der Ausführungsform der Fig. 5 bleibt die Rückführung des normierten Drehzahlunterschieds aus Subtrahierer 109 erhalten. Sie dient aber lediglich der Kompensation des Restfehlers im Leerlaufmodell. Die eigentliche Kompensation um das Pumpenmoment erfolgt zwar auch am Summationspunkt 104, aber mit einem dem Wandlermodell 501, 502 entnommenen Pumpenmoment MPumpe. Das Wandlermodell 501, 502 kann in eine Wandlerkennlinie 501 und ein Getriebemodell 502 unterteilt sein. Das Fahrzeugantriebsmoment entstammt dann letztendlich dem Getriebemodell 502, das das Wandlerabtriebsmoment MTurbine überträgt und an die Antriebsachse abgibt. Das Getriebemodell 502 empfängt außerdem zumindest eine Raddrehzahl NRrad und gibt eine Turbinendrehzahl NTurbine aus, die als Eingangsgröße des Wandlermodells verwendet werden kann.

Insbesondere kann die Wandlerbeschreibung durch ein Modell anhand der folgenden Formel erfolgen:

$$M_{Pumpe} = K_{Pumpe} \cdot n_{Pumpe}^2 \cdot D_{Pumpe}^5$$

wobei $M_{Pumpe}$ das Pumpenmoment des Wandlers (Eingangsmoment des Wandlers) ist, $K_{Pumpe}$ eine Konstante, $n_{Pumpe}$ die Pumpendrehzahl und $D_{Pumpe}$ der Durchmesser des Pumpenrads ist. Darüber hinaus benützt das wandlermodell 501 eine Wandlerkennlinie, die nach Maßgabe der Drehzahlen das Verhältnis zwischen Pumpenund Turbinenmoment ähnlich Fig. 4 angibt.

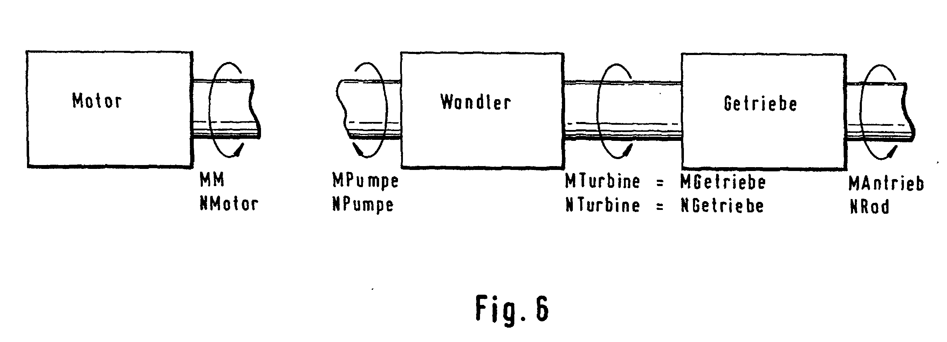

Fig. 6 zeigt schematisch den Zusammenhang zwischen den Drehzahlen und Momenten im Kraftübertragungsstrang eines Fahrzeugs. Der Motor erzeugt ein Abtriebsmoment MM bei einer Motordrehzahl NMotor. Der Wandler nimmt das Pumpenmoment MPumpe auf und dreht sich mit der Drehzahl NPumpe die gleich der Motordrehzahl NMotor ist. Ausgangsseitig hat der Wandler das Turbinenmoment MTurbine und die Drehzahl NTurbine, die jeweils gleich den eingangsseitigen Werten des Getriebemoments MGetriebe und der Getriebedrehzahl NGetriebe sind. Entsprechend der Getriebegesamtübersetzung ergeben sich daraus auch unter Berücksichtigung dynamischer Effekte das eigentliche Fahrzeugantriebsmoment MAntrieb sowie die Raddrehzahl NRad.

Der Vorteil der Ausführungsform nach Fig. 5 ist es, daß durch eine genauere Modellierung des Wandlers und die Rückführung mindestens einer Ausgangsgröße zum Leerlaufmodell eine verbesserte Schätzung der Schätz-Motordrehzahl NMotorBeo erfolgt. Das Leerlaufmodell selbst wird zur Ermittlung der Schätz-Motordrehzahl NMotorBeo benötigt, anhand derer das Wandlermodell arbeitet. In der Ausführungsform der Fig. 5 ist der Beobachter durch die Rückführung mindestens einer Ausgangsgröße des Wandlermodells zum Leerlaufmodell von der Handhabung der wesentlichen statischen Fehler entlastet, so daß er hinsichtlich dynamischer Effekte günstiger ausgelegt werden kann. Dazu verwendet das Wandlermodell die dem Beobachter entnommene Schätz-Motordrehzahl NMotorBeo und nicht die Ist-Motor-Drehzahl, weil das Wandlermodell selbst eine Rückführung zum Beobachter enthält.

In den Ausführungsformen der Fig. 1, 3 und 5 ist ein sehr spezielles Leerlaufmodell gezeigt, es entspricht jeweils der Fig. 2. Auch andere Leerlaufmodelle sind jedoch denkbar, sofern sie den beiden oben erhobenen Forderungen an das Leerlaufmodell hinreichend entsprechen. Das beschriebene Verfahren wird vorzugsweise kontinuierlich ausgeführt oder periodisch angestoßen.

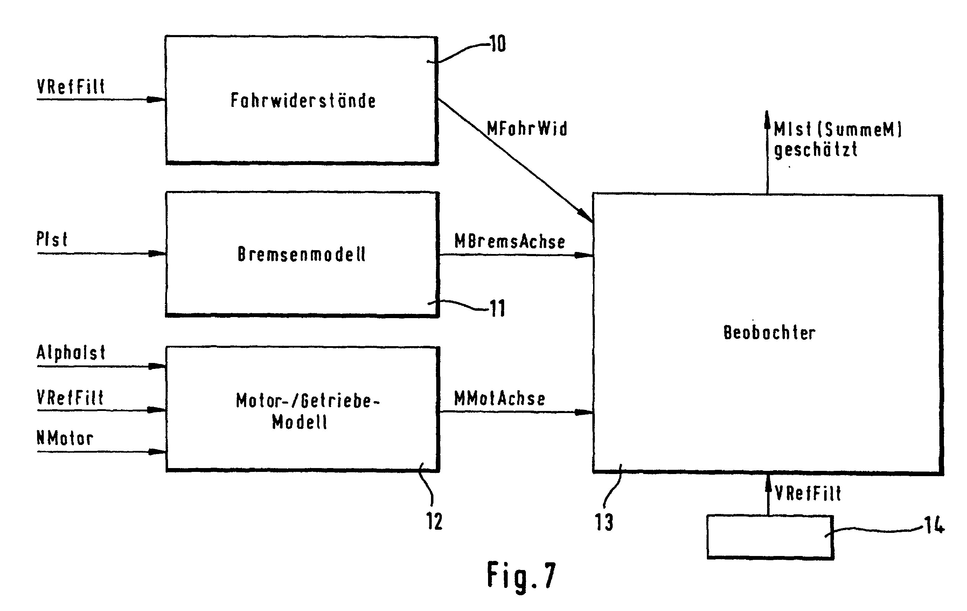

Fig. 7 zeigt schematisch eine erfindungsgemäße Ausführungsform zur Bestimmung extern verursachter Momente. Die Einrichtungen 10 bis 12 sind Einrichtungen zum Ermitteln interner bzw. intern verursachter Momente. Insbesondere können eine Einrichtung 12 zur Ermittlung des Motormoments MMotAchse und eine Einrichtung 11 zum Ermitteln eines Bremsmoments MBremsAchse vorgesehen sein. Daneben kann auch eine Einrichtung 10 zum Ermitteln eines Fahrwiderstands MFahrWid vorgesehen sein. Die Einrichtungen 10 bis 12 arbeiten ihrerseits nach Maßgabe bestimmter Eingangsgrößen. Insbesondere können die Einrichtungen 11 und 12 Modelle und/oder Tabellen sein, die das Verhalten der Bremse und/oder des Motors/Getriebes modellieren bzw. beschreiben und die gewünschten Ausgangsgrößen liefern.

Der Beobachter 13 ermittelt anhand eines Modells und bezugnehmend auf die oben geschilderten Eingangsgrößen das "theoretische" Fahrverhalten bzw. die "theoretische" Längsdynamik, insbesondere Geschwindigkeit, des Fahrzeugs, wobei auch hierfür auf charakteristische Werte Bezug genommen wird. Charakteristische Werte sind beispielsweise Reifenradius oder Fahrzeugmasse. Außerdem empfängt der Beobachter 13 einen dem theoretischen Wert entsprechenden gemessenen Wert aus einer entsprechenden Einrichtung 14. Eine Abweichung zwischen theoretischem und gemessenem Wert kann bei hinreichend genauer Modellierung der Längsdynamik auf extern verursachte, nicht modellierte Größen, insbesondere Momente, zurückgeführt werden, so daß aus der Abweichung auf eben diese externe Größe geschlossen werden kann.

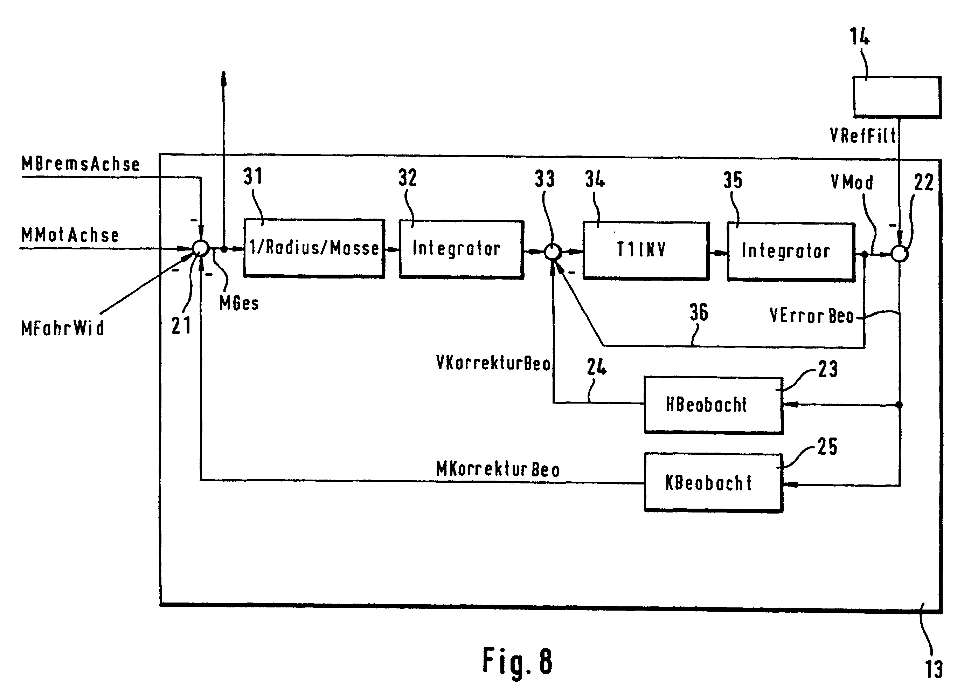

Fig. 8 zeigt den Beobachter 13 aus Fig. 7 in genauerer Darstellung. Der Beobachter 13 weist ein Modell des Fahrverhaltens bzw. der Längsdynamik des Fahrzeugs auf, dies sind die Ziffern 31 bis 36. Außerdem weist er eine Einrichtung zur Ermittlung der externen Größe auf, es handelt sich um die Ziffern 21, 22, 25. Bevor die Funktion des Beobachters 13 anhand von Fig. 8 genauer erläutert wird, wird bezugnehmend auf Fig. 9 das Modell des Fahrverhaltens bzw. der Längsdynamik des Fahrzeugs beschrieben. In Fig. 9 sind die Komponenten 31 bis 36 aus Fig. 8 zur Verdeutlichung nochmals wiedergegeben.

Das Modell für das Fahrverhalten des Fahrzeugs bzw. für dessen Längsdynamik muß, damit es für die vorliegende Erfindung geeignet ist, zumindest die gleichen zwei Bedingungen erfüllen wie weiter oben erwähnt, nämlich es muß geeignete Eingangs- und Ausgangswerte haben, und es muß statische wie dynamische Effekte hinreichend genau berücksichtigen.

Das Modell in Fig. 9 erfüllt diese Forderungen. Als Eingangswert empfängt es ein Gesamtmoment, das auf das Fahrzeug wirkt. Dieses Gesamtmoment MGes ist die Summe aller beschleunigenden und verzögernden Momente. Wenn das Gesamtmoment MGes Null ist, wird das Fahrzeug mit konstanter Geschwindigkeit fahren. Ist es größer Null, wird das Fahrzeug beschleunigt, ist es negativ, wird das Fahrzeug verzögert. In der Kalibrierung 31 wird das Gesamtmoment nach Maßgabe von Radradius und Fahrzeugmasse kalibriert. Unter "Kalibrierung" ist hierbei eine proportionale Umrechnung zu verstehen, die z. B. der Umrechnung, Normierung oder Werteanpassung dient. Man erhält dadurch eine einer Beschleunigung entsprechenden Größe. Im Integrierer 32 wird diese Größe integriert. Dadurch ergibt sich eine einer Geschwindigkeit entsprechende Größe. Außerdem ist eine die Dynamik nachbildende Baugruppe 33 bis 36 vorgesehen. In der dargestellten Ausführungsform handelt es sich um ein $PT_1$-Glied, das Veränderungen am Eingang nur allmählich an den Ausgang weitergibt. Das $PT_1$-Glied besteht aus einem Subtrahierer 33, einer Kalibrierung 34, einem Integrierer 35 und der Rückführung 36, die am Subtrahierer 33 eingespeist wird. Durch den Wert der Kalibrierung 34 wird die Zeitkonstante des $PT_1$-Glieds bestimmt. Mit dem $PT_1$-Glied wird der Tatsache Rechnung getragen, daß reale Systeme auf Änderungen ihrer Eingangsgrößen praktisch immer verzögert reagieren. Damit wird eine verbesserte Nachbildung der Fahrzeugdynamik möglich. Als Ausgang ergibt sich eine Geschwindigkeit VMod, die das Modell in Fig. 9 als "theoretische" Geschwindigkeit des Fahrzeugs anhand des eingegebenen Gesamtmoments MGes ermittelt hat.

Die Reihenfolge der einzelnen Komponenten kann auch anders als in Fig. 9 gezeigt sein. Die gegenkoppelnde Rückführung 23, 24 in Fig. 8 sollte jedoch nach dem Integrierer 32 eingespeist werden. Die Einrichtung 14 zur Ermittlung der Ist-Fahrzeuggeschwindigkeit VRefFilt kann ein Sensor sein, der ein entsprechendes Signal ausgibt. Es kann aber auch eine komplexere Vorrichtung vorgesehen sein, die geeignete Beurteilungs- und Filtermaßnahmen vornimmt, um möglichst störungsfreie Signale zu erhalten.

Das bezugnehmend auf Fig. 9 beschriebene Fahrzeugmodell ist beispielhaft zu verstehen. Es können auch andere Modelle verwendet werden, die den weiter oben erhobenen Forderungen genügen.

Nun abermals bezugnehmend auf Fig. 8 wird die Verwendung des Modells aus Fig. 9 im Beobachter 13 erläutert. Die vom Modell ermittelte "theoretische" Fahrzeuggeschwindigkeit VMod wird mit der tatsächlichen Fahrzeuggeschwindigkeit VRefFilt verglichen. Insbesondere wird im Subtrahierer 22 die Differenz zwischen Modellgeschwindigkeit (auch Schätz-Fahrzeuggeschwindigkeit genannt) und tatsächlicher Geschwindigkeit (auch Ist-Fahrzeuggeschwindigkeit genannt) VRefFilt gebildet. Die Abweichung zwischen Schätz- und Ist-Fahrzeuggeschwindigkeit ist auf extern verursachte, nicht modellierte Größen und insbesondere Momente zurückzuführen und erlaubt damit einen Rückschluß auf eben diese externen Größen und insbesondere Momente. Wenn das Fahrzeug beispielsweise bergauf fährt, wirkt das extern verursachte Moment verzögernd. Ohne Berücksichtigung dieses externen Moments würde die Schätz-Geschwindigkeit zu hoch und insbesondere höher als die Ist-Fahrzeuggeschwindigkeit sein. Wenn das Fahrzeug bergab fährt, wirkt das Hangabtriebsmoment beschleunigend. Ohne Berücksichtigung des Hangabtriebsmoments würde demnach die Schätz-Fahrzeuggeschwindigkeit VMod kleiner sein als die Ist-Fahrzeuggeschwindigkeit VRefFilt. Somit kann aus der Abweichung und insbesondere der Differenz zwischen Schätzund Ist-Fahrzeuggeschwindigkeit die extern verursachte Größe, insbesondere das extern verursachte Moment, ermittelt werden. Damit dann der Beobachter 13 insgesamt stabil arbeitet, kann das ermittelte externe Moment zu den übrigen schon ermittelten Momenten (aus den Einrichtungen 10 bis 12) vorzeichenrichtig addiert werden. Dazu wird es im Summationspunkt 21 eingeführt. Die Einrichtung 25 ist eine Kalibrierung, die den Geschwindigkeitsunterschied in den entsprechenden Momentenfehler vorzugsweise proportional umrechnet. Damit ist der Ausgang der Einrichtung 25, das Signal MKorrekturBeo, das eigentlich gesuchte extern verursachte Moment, das als Ausgangssignal verwendet werden kann und das, wie schon gesagt, auch in den Beobachter am Summationspunkt 21 zurückgeführt werden kann.

Aus regelungstechnischer Sicht kann außerdem eine Rückführung 23, 24 vorgesehen sein, die ein der Differenz zwischen Schätz-Fahrzeuggeschwindigkeit und Ist-Fahrzeuggeschwindigkeit proportionales Signal in das Fahrzeugmodell nach dem Integrierer zurückführt. Stabilität und dynamische Eigenschaften des Modells werden dadurch verbessert. Die gegenkoppelnde Rückführung kann beispielsweise am Summationspunkt 33 erfolgen.

Die erfindungsgemäße Vorrichtung kann durch diskrete Bauelemente implementiert sein. Sie kann aber auch durch einen geeignet programmierten Rechner gebildet sein, der die entsprechenden Eingangsgrößen empfängt, die gewünschten Ausgangsgrößen ausgibt und Zugriff auf die weiterhin benötigten Daten hat. Das Verfahren wird vorzugsweise fortlaufend ausgeführt oder periodisch angestoßen.

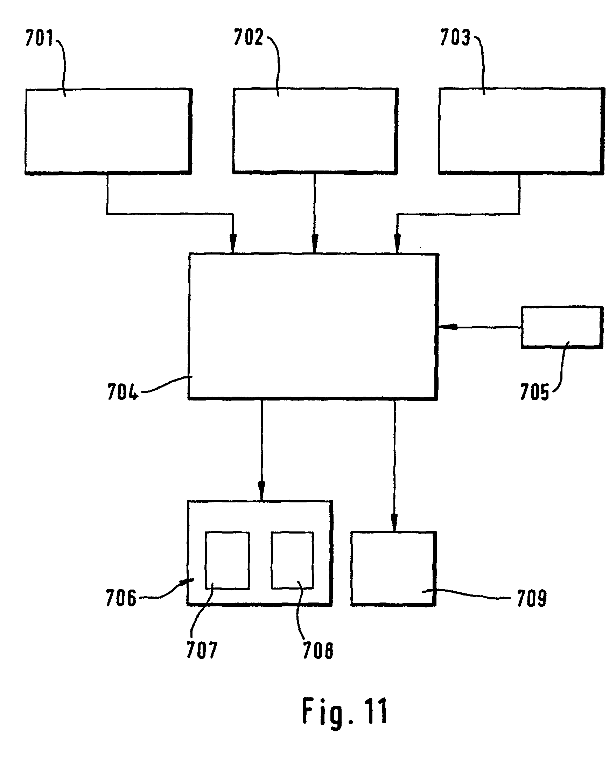

Mit den erfindungsgemäßen Verfahren und Vorrichtungen ist es möglich, das Fahrzeugantriebsmoment während Übergangszuständen sowie extern verursachte Momente zu ermitteln. Damit kann beispielsweise eine Anfahrhilfe am Berg realisiert werden, wie sie in Fig. 11 schematisch gezeigt ist. Damit ein zurückrollen eines bergauf anfahrenden Fahrzeugs vermieden wird, muß folgende Bedingung erfüllt sein:

$$MMotorBeo + MBrems > MAbtrieb$$

wobei MMotorBeo das z. B. wie oben beschrieben ermittelte Fahrzeugantriebsmoment ist, MBrems das das Fahrzeug bremsende Moment und MAbtrieb (=MkorrekturBeo aus Fig. 8) das aufgrund der Hangabtriebskraft entstehende extern verursachte Moment. Letzteres ist nicht beeinflußbar. Das Motormoment ändert sich nach Maßgabe des Fahrerwillens und insbesondere nach Maßgabe des Gaspedal- bzw. des Drosselklappenwinkels, und das abgegebene Fahrzeug-Antriebsmoment kann, insbesondere wie oben beschrieben, in der Ermittlungsvorrichtung 701 ermittelt werden. Das extern verursachte Hangabtriebsmoment kann insbesondere wie oben beschrieben in der Ermittlungsvorrichtung 702 ermittelt werden. Außerdem kann in einer Ermittlungsvorrichtung 703 das Bremsmoment der Bremsanlage 706 ermittelt werden, wobei ggf. Betriebsbremse 707 und Feststellbremse 708 zu berücksichtigen sind. Entsprechend der obigen Gleichung kann dann von einer Beeinflussungsvorrichtung 704, die die oben genannten, ermittelten Werte empfängt, beispielsweise über die Bremsanlage 706 das Bremsmoment beeinflußt werden. Die Bremsanlage 706 umfaßt die Betriebsbremse 707 und die Feststellbremse 708, wobei eine von beiden oder beide zusammen fremdgesteuert werden können, d.h. unabhängig von einer Betätigung durch den Fahrer betätigt werden können. Insbesondere ist eine Fremdsteuerung ohne oder zusätzlich zu einer Fahrerbetätigung möglich. Denkbar ist es auch, das Fahrzeugantriebsmoment über den Motor 709 zu beinflussen. Die Beeinflussungsvorrichtung 704 kann neben den genannten, ermittelten Werten weitere Eingangsgrößen aus geeigneten Vorrichtungen 705 empfangen. Desweiteren wird in der Beeinflussungsvorrichtung 704 die Koordination einer Fremdsteuerung der Bremse 706 durch die Beeinflussungsvorrichtung 704 selbst, einer Fahrerbetätigung der Bremse 706, einer Beeinflussung des Fahrzeugantriebsmoments über den Motor 709 durch die Beeinflussungsvorrichtung 704 selbst und einer Beeinflussung des Fahrzeugantriebsmoments über den Motor 709 durch den Fahrer geeignet vorgenommen.

Insbesondere kann das Bremsmoment nach Maßgabe des konstanten Hangabtriebsmoments und des während des Anfahrens bzw. Einkuppelns bzw. Hochdrehen des Motors steigenden Antriebsmoments verringert werden, bis das Fahrzeug vorwärts losrollt.

Die erfindungsgemäße Vorrichtung kann durch diskrete Bauelemente implementiert sein. Sie kann aber auch durch einen geeignet programmierten Rechner gebildet sein, der die notwendigen Eingangssignale empfängt, Ausgangssignale ausgibt und die benötigten Daten und Kennwerte in entsprechenden Speichern findet.

## Patentansprüche

1. Verfahren zum Ermitteln des Fahrzeugantriebsmoments beim Anfahren eines Fahrzeugs, mit den Schritten modellbasiertes Ermitteln einer Schätz-Motordrehzahl im lastlosen Zustand des Motors, Ermitteln der Ist-Motordrehzahl anhand gemessener Werte, Ermitteln des Fahrzeugantriebsmomentes nach Maßgabe der Ist- und der Schätzmotordrehzahl.

2. Verfahren nach Anspruch 1, **dadurch gekennzeichnet, daß** ein Leerlaufmotormoment anhand gemessener Werte, ermittelt wird und die Schätz-Motordrehzahl aus dem Leerlaufmotormoment bestimmt wird.

3. Verfahren nach Anspruch 1 oder 2, **dadurch gekennzeichnet, daß** die Schätz-Motordrehzahl auch nach Maßgabe des Fahrzeugantriebsmomentes ermittelt wird.

4. Verfahren nach Anspruch 3, **dadurch gekennzeichnet, daß** der Schritt des Ermittelns der Schätz-Motordrehzahl aufweist Ermitteln eines Motorschleppmoments vorzeichenrichtiges Summieren von am Motor wirkenden Momenten, und danach Kalibrieren, Verzögern und Integrieren.

**5.** Verfahren nach Anspruch 4, **dadurch gekennzeichnet, daß** der Schritt des Ermittelns der Schätz-Motordrehzahl eine weitere Verzögerung erster oder höherer Ordnung aufweist.

**6.** Verfahren nach einem der Ansprüche 1 bis 5, **dadurch gekennzeichnet**, daB das Fahrzeugantriebsmoment nach Maßgabe der Differenz zwischen der Ist- und der Schätz-Motordrehzahl ermittelt wird.

**7.** Verfahren nach Anspruch 4, **dadurch gekennzeichnet, daß** das Motorschleppmoment nach Maßgabe einer Motordrehzahl ermittelt wird.

**8.** Verfahren nach einem der Ansprüche 2 bis 7, **dadurch gekennzeichnet, daß** das Leerlaufmotormoment insbesondere nach Maßgabe des Drosselklappenwinkels bezugnehmend auf eine Formel oder ein Kennfeld ermittelt wird.

**9.** Verfahren nach einem der Ansprüche 1 bis 8, **dadurch gekennzeichnet, daß** bei Fahrzeugen mit Automatikgetriebe das Fahrzeugantriebsmoment unter Berücksichtigung von Eigenschaften eines Wandlers ermittelt wird.

**10.** Verfahren nach Anspruch 9 und 6, **dadurch gekennzeichnet, daß** die Wandlereigenschaft nach Bildung der Differenz zwischen der Ist- und der Schätz-Motordrehzahl insbesondere nach Maßgabe eines Kennfelds oder einer Formel berücksichtigt wird.

**11.** Verfahren nach Anspruch 9, **dadurch gekennzeichnet, daß** die wandlereigenschaft nach Maßgabe der Schätz-Motordrehzahl und zumindest einer Raddrehzahl anhand eines Modells ermittelt wird, wobei dieses Modell auch das Fahrzeugsantriebsmoment ausgibt.

**12.** Verfahren nach Anspruch 11, **dadurch gekennzeichnet, daß** auch das Pumpenmoment mit dem Modell der Wandlereigenschaft ermittelt wird, und die Schätz-Motordrehzahl auch nach Maßgabe des Pumpenmoments ermittelt wird.

**13.** Vorrichtung zum Ermitteln des Fahrzeugantriebsmoments beim Anfahren eines Fahrzeugs, mit einem Modell des Leerlaufverhaltens des Motors im lastlosen Zustand, einem Vergleicher für Modellausgangswerte und entsprechende Meßwerte oder davon abgeleitete Werte, und einer Ermittlungseinrichtung zum Ermitteln des Fahrzeugantriebsmomentes nach Maßgabe des Vergleichsergebnisses.

**14.** Vorrichtung nach Anspruch 13, **gekennzeichnet durch** eine erste Ermittlungseinrichtung (101, 102) zum Ermitteln des Leerlaufmotormoments (MMotor), eine zweite Ermittlungseinrichtung (103 - 108) zum Ermitteln einer Schätz-Motordrehzahl (NMotorBeo) aus dem Leerlaufmotormoment, eine dritte Ermittlungseinrichtung (112) zum Ermitteln der Ist-Motordrehzahl (NMotorMess) anhand gemessener Werte, und eine vierte Ermittlungseinrichtung (109, 110, 114) zum Ermitteln des Fahrzeugantriebsmomentes (MKorrBeo) nach Maßgabe der Ist- und der Schätzmotordrehzahl.

**15.** Vorrichtung nach Anspruch 14, **dadurch gekennzeichnet, daß** die dritte Ermittlungseinrichtung die Schätz-Motordrehzahl auch nach Maßgabe des Fahrzeugantriebsmomentes ermittelt.

**16.** Vorrichtung nach Anspruch 15, **dadurch gekennzeichnet, daß** die dritte Ermittlungseinrichtung aufweist eine fünfte Ermittlungseinrichtung (103) zum Ermitteln eines Motorschleppmoments (MSchlepp) einen Addierer (104) zum vorzeichenrichtigen Summieren von auf den Motor wirkenden Momenten, und einen Kalibrierer (105, 108), ein Verzögerungsglied (106) und einen Integrierer (107).

**17.** Vorrichtung nach Anspruch 16, **gekennzeichnet durch** ein weiteres Verzögerungsglied (115) erster oder höherer Ordnung in der dritten Ermittlungseinrichtung.

**18.** Vorrichtung nach einem der Ansprüche 14 bis 17, **dadurch gekennzeichnet, daß** die vierte Ermittlungseinrichtung einen Subtrahierer (109) aufweist, der die Differenz zwischen der Ist- und der Schätz-Motordrehzahl bildet.

**19.** Vorrichtung nach Anspruch 16, **dadurch gekennzeichnet, daß** die fünfte Ermittlungseinrichtung das Motorschleppmoment nach Maßgabe einer Motordrehzahl ermittelt.

**20.** Vorrichtung nach einem der Ansprüche 14 bis 19, **dadurch gekennzeichnet, daß** das Motormoment insbesondere nach Maßgabe des Drosselklappenwinkels bezugnehmend auf eine Formel oder ein Kennfeld ermittelt wird.

**21.** Vorrichtung nach einem der Ansprüche 14 bis 20, **dadurch gekennzeichnet, daß** sie bei Fahrzeugen mit Automatikgetriebe ein Wandlermodell (301, 501 - 502) aufweist und das Fahrzeugantriebsmomentmoment unter Berücksichtigung einer Ausgabe des Wandlermodells ermittelt wird.

22. Vorrichtung nach Anspruch 21 und 18, **dadurch gekennzeichnet, daß** das Wandlermodell (301) nach Maßgabe der Differenz zwischen der Ist- und der Schätz-Motordrehzahl und insbesondere nach Maßgabe eines Kennfelds oder einer Formel wirkt.

23. Vorrichtung nach Anspruch 21, **dadurch gekennzeichnet, daß** das wandlermodell die Schätz-Motordrehzahl (NMotorBeo) und zumindest einer Raddrehzahl (NRad) empfängt und das Fahrzeugsantriebsmoment ausgibt.

24. Vorrichtung nach Anspruch 23, **dadurch gekennzeichnet, daß**
   das Wandlermodell auch das Pumpenmoment (MPumpe) ausgibt, und
   die dritte Ermittlungseinrichtung die Schatz-Motordrehzahl auch nach Maßgabe des Pumpenmoments ermittelt.

25. Verfahren zum Ermitteln einer extern verursachten, ein Fahrzeug antreibenden oder bremsenden Größe, insbesondere eines solchen Moments, nach einer der Ansprüche 1 bis 12, **gekennzeichnet durch**
   die Schritte Modellbasiertes Ermitteln des Fahrverhaltens des Fahrzeugs,
   Vergleichen von Modellausgangswerten mit entsprechenden Meßwerten oder davon abgeleiteten Werten, und
   Ermitteln der extern verursachten Größe nach Maßgabe des Vergleichsergebnisses.

26. Verfahren nach Anspruch 25, **gekennzeichnet durch** die Schritte
   Ermitteln von internen, das Fahrzeug antreibenden und bremsenden Momenten oder Kräften,
   Ermitteln einer Schätz-Fahrzeuggeschwindigkeit aus den ermittelten Momenten oder Kräften,
   Ermitteln der Ist-Fahrzeuggeschwindigkeit anhand gemessener Werte, und
   Ermitteln der extern verursachten Größe, insbesondere des Moments, nach Maßgabe der Ist- und der Schätz-Fahrzeuggeschwindigkeit.

27. Vorrichtung zum Ermitteln einer extern verursachten, ein Fahrzeug antreibenden oder bremsenden Größe, insbesondere eines solchen Moments, nach einem der Ansprüche 13 bis 24, **gekennzeichnet durch**
   ein Modell (31 - 36) des Fahrverhaltens des Fahrzeugs, einen Vergleicher (22) für Modellausgangswerte und entsprechende Meßwerte oder davon abgeleitete Werte, und
   eine Einrichtung (25) zum Ermitteln der extern verursachten Größe nach Maßgabe des Vergleichergebnisses.

28. Vorrichtung nach Anspruch 27, **gekennzeichnet durch** eine erste Ermittlungseinrichtung (10 - 12) zum Ermitteln von internen, das Fahrzeug antreibenden und bremsenden Momenten oder Kräften (MMotAchse, MBremsAchse, MFahrWid),
   eine zweite Ermittlungseinrichtung (31 - 36) zum Ermitteln einer Schätz-Fahrzeuggeschwindigkeit (VMod) aus ermittelten Momenten oder Kräften,
   eine dritte Ermittlungseinrichtung (14) zum Ermitteln der Ist-Fahrzeuggeschwindigkeit (VRefFilt) anhand gemessener Werte, und
   eine vierte Ermittlungseinrichtung (22, 25) zum Ermitteln der extern verursachten Größe (MKorrektur-Beo), insbesondere Moments, nach Maßgabe der Ist- und der Schätz-Fahrzeuggeschwindigkeit.

29. Verfahren zum Unterstützen des Anfahrens eines Fahrzeugs bergaufwärts, nach einem der Ansprüche 1 bis 12, **gekennzeichnet durch** die Schritte Ermitteln des Fahrzeugantriebsmoments während des Anfahrens,
   Ermitteln extern verursachter Momente,
   Beeinflussen von Betriebsbremse und/oder Feststellbremse und/oder Motormoment nach Maßgabe der ermittelten Momente.

30. Verfahren nach Anspruch 29, **dadurch gekennzeichnet, daß**
   das Fahrzeugantriebsmoment nach einem der Ansprüche 1 bis 12 ermittelt wird,
   das extern verursachte Moment nach Anspruch 25 oder 26 ermittelt wird,
   das Bremsmoment ermittelt wird, und
   die Betriebsbremse und/oder die Feststellbremse so beeinflußt wird, daß die Summe aus Bremsmoment und Fahrzeugantriebsmoment größer ist als das extern verursachte Moment.

31. Vorrichtung zum Unterstützen des Anfahrens eines Fahrzeugs bergaufwärts, nach einem der Ansprüche 13 bis 24, **gekennzeichnet durch**
   eine Vorrichtung (701) zum Ermitteln des Fahrzeugantriebsmoments während des Anfahrens,
   eine Vorrichtung (702) zum Ermitteln extern verursachter Momente, und
   eine Vorrichtung (704) zum Beeinflussen von Betriebsbremse und/oder Feststellbremse und/oder Motormoment nach Maßgabe der ermittelten Momente.

32. Vorrichtung nach Anspruch 31, **dadurch gekennzeichnet, daß**
   die Ermittlungsvorrichtung (701) für das Fahrzeugantriebsmoment nach einem der Ansprüche 13 bis 24 ausgebildet ist,
   die Ermittlungsvorrichtung (702) für das extern verursachte Moment nach Anspruch 27 oder 28 ausgebildet ist,

die Beeinflussungsvorrichtung (704) die Betriebsbremse (707) und/oder die Feststellbremse (708) so beeinflußt, daß die Summe aus Bremsmoment und Fahrzeugantriebsmoment größer ist als das extern verursachte Moment.

**Claims**

1. A process for determining the driving torque of a vehicle as the vehicle is starting, comprising the steps:

   determining an estimated engine speed when the engine is in a non-loaded state on the basis of a model,
   determining the actual engine speed on the basis of measured values,
   determining the driving torque of the vehicle according to the actual and estimated engine speed.

2. A process according to Claim 1, **characterized in that** an idling engine torque is determined on the basis of measured values and the estimated engine speed is determined on the basis of the idling engine torque.

3. A process according to Claim 1 or 2, **characterized in that** the estimated engine speed also is determined according to the driving torque of the vehicle.

4. A process according to Claim 3, **characterized in that** the step of determining the estimated engine speed includes determining an engine drag torque, adding the torques acting on the engine according to their signs, followed by calibrating, delaying and integrating.

5. A process according to Claim 4, **characterized in that** the step of determining the estimated engine speed includes an additional delay of first or higher order.

6. A process according to one of the Claims 1 to 5, **characterized in that** the driving torque of the vehicle is determined according to the difference between the actual and estimated engine speed.

7. A process according to Claim 4, **characterized in that** the engine drag torque is determined according to an engine speed.

8. A process according to one of the Claims 2 to 7, **characterized in that** the idling engine torque is determined in particular according to the angle of the throttle valve based on an equation or characteristics map.

9. A process according to one of the Claims 1 to 8, **characterized in that** the driving torque of vehicles with automatic transmissions is determined taking into consideration the properties of a torque converter.

10. A process according to Claims 9 and 6, **characterized in that** the characteristics of the converter are taken into consideration after forming the difference between the actual and estimated engine speed, in particular according to a characteristics map or an equation.

11. A process according to Claim 9, **characterized in that** the characteristics of the converter are determined according to the estimated engine speed and at least one wheel speed on the basis of a model, with this model also providing the driving torque of the vehicle.

12. A process according to Claim 11, **characterized in that** the pump torque also is determined with the model of the converter characteristics, and the estimated engine speed also is determined according to the pump torque.

13. A device for determining the driving torque of a vehicle as the vehicle is starting with
    a model of the idling properties of the engine in a non-loaded state,
    a comparing element for the output values of the model and corresponding measured values or values derived therefrom, and
    a determining element for determining the driving torque of a vehicle according to the results of the comparison.

14. A device according to Claim 13, **characterized by** a first determining element (101, 102) for determining the idling engine torque (NMotor),
    a second determining element (103-108) for determining an estimated engine speed (NMotorObs) based on the idling engine torque,
    a third determining element (112) for determining the actual engine speed (NMotorMeas) on the basis of measured values, and
    a fourth determining element (109, 110, 114) for determining the driving torque of the vehicle (MCorrObs) according to the actual and estimated engine speed.

15. A device according to Claim 14, **characterized in that** the third determining element determines the estimated engine speed also according to the driving torque of the vehicle.

**16.** A device according to Claim 15, **characterized in that** the third determining element exhibits a fifth determining element (103) for determining an engine drag torque (MDrag), an adder (104) to add the torques acting on the engine according to their signs, and a calibrating element (105, 108), a delay element (106), and an integrator (107).

**17.** A device according to Claim 16, **characterized by** another delay element (115) of first or higher order in the third determining element.

**18.** A device according to one of the Claims 14 to 17, **characterized in that** the fourth determining element exhibits a subtractor (109) that forms the difference between the actual and the estimated engine speed.

**19.** A device according to Claim 16, **characterized in that** the fifth determining element determines the engine drag torque according to an engine speed.

**20.** A device according to one of the Claims 14 to 19, **characterized in that** the engine torque is determined in particular according to the angle of the throttle valve with reference to an equation or a characteristics map.

**21.** A device according to one of the Claims 14 to 20, **characterized in that** it exhibits a converter model (301, 501-502) in vehicles with automatic transmissions, and the driving torque of the vehicle is determined taking into consideration an output of the converter model.

**22.** A device according to Claims 21 and 18, **characterized in that** the converter model (301) acts according to the difference between the actual and estimated engine speed and in particular according to a characteristics map or an equation.

**23.** A device according to Claim 21, **characterized in that** the converter model receives the estimated engine speed (NMotorObs) and at least one wheel speed (NWheel) and outputs the driving torque of the vehicle.

**24.** A device according to Claim 23, **characterized in that** the converter model outputs also the pump torque (MPump), and the third determining element determines the estimated engine speed also according to the pump torque.

**25.** A process for determining an externally generated variable that drives or brakes a vehicle, in particular such a torque, according to one of the Claims 1 to 12, **characterized by** the steps:

determining the running properties of the vehicle on the basis of a model,
comparing the values output by the model with corresponding measured values or values derived therefrom, and
determining the externally generated variable according to the results of the comparison.

**26.** A process according to Claim 25, **characterized by** the steps:

determining internal torques or forces that drive or brake the vehicle,
determining an estimated vehicle speed based on the determined torques or forces,
determining the actual vehicle speed on the basis of measured values, and
determining the externally generated variable, in particular the torque, according to the actual and estimated vehicle speed.

**27.** A device for determining an externally generated variable, in particular such a torque, that drives or brakes a vehicle, according to one of Claims 13 to 24, **characterized by** a model (31-36) of the running properties of the vehicle, a comparing element (22) for model output values and corresponding measured values or values derived therefrom, and an element (25) for determining the externally generated variable according to the result of the comparison.

**28.** A device according to Claim 27, **characterized by** a first determining element (10-12) for determining internal torques or forces (MMotAxle, MBrakeAxle, MRoadRes) that drive or brake the vehicle, a second determining element (31-36) for determining an estimated vehicle speed (VMod) on the basis of determined torques or forces, a third determining element (14) for determining the actual vehicle speed (VRefFilt) on the basis of measured values, and a fourth determining element (22, 25) for determining the externally generated variable (MCorrectObs), in particular a torque, according to the actual and estimated vehicle speed.

**29.** A process to support uphill starting of a vehicle, according to one of Claims 1 to 12, **characterized by** the steps:

determining the driving torque of the vehicle as it is starting,
determining externally generated torques,
influencing the service brake and/or parking brake and/or engine torque according to the torques determined.

**30.** A process according to Claim 29, **characterized in that** the driving torque of the vehicle is determined according to one of the Claims 1 to 12,
the externally generated torque is determined according to Claim 25 or 26,
the brake torque is determined, and
the service brake and/or the parking brake is influenced in such a way that the sum of the braking torque and driving torque of the vehicle is greater than the externally generated torque.

**31.** A device to support uphill starting of a vehicle, as claimed in one of Claims 13 to 24, **characterized by** a device (701) for determining the driving torque of the vehicle as the vehicle is starting,
a device (702) for determining externally generated torques, and
a device (704) for influencing the service brake and/or parking brake and/or engine torque according to the determined torques.

**32.** A device according to Claim 31, **characterized in that**
the determining element (701) for the driving torque of the vehicle is designed according to one of the Claims 13 to 24,
the determining element (702) for the externally generated torque is designed according to Claim 27 or 28,
the influencing element (704) influences the service brake (707) and/or parking brake (708) in such a way that the sum of the braking torque and driving torque of the vehicle is greater than the externally generated torque.

**Revendications**

**1.** Procédé pour déterminer le couple moteur d'un véhicule au démarrage d'un véhicule, comportant les étapes suivantes : détermination sur la base d'un modèle d'une vitesse de rotation estimée du moteur à l'état non chargé, détermination de la vitesse de rotation réelle du moteur à l'aide de valeurs mesurées, détermination du couple moteur du véhicule en fonction de la vitesse de rotation réelle et de la vitesse de rotation estimée du moteur.

**2.** Procédé selon la revendication 1, **caractérisé en ce qu'**on détermine un couple de marche à vide du moteur à l'aide de valeurs mesurées et on détermine la vitesse de rotation estimée du moteur à partir du couple de marche à vide du moteur.

**3.** Procédé selon la revendication 1 ou 2, **caractérisé en ce qu'**on détermine aussi la vitesse de rotation estimée du moteur en fonction du couple moteur du véhicule.

**4.** Procédé selon la revendication 3, **caractérisé en ce que** l'étape de détermination de la vitesse de rotation estimée du moteur comporte : la détermination d'un couple de traînée du moteur, l'addition avec signe correct des couples agissant sur le moteur, puis le calibrage, la temporisation et l'intégration.

**5.** Procédé selon la revendication 4, **caractérisé en ce que** l'étape de détermination de la vitesse de rotation estimée du moteur comporte une autre temporisation de premier ordre ou d'ordre supérieur.

**6.** Procédé selon l'une des revendications 1 à 5, **caractérisé en ce que** le couple moteur du véhicule est déterminé en fonction de la différence entre la vitesse de rotation réelle et la vitesse de rotation estimée du moteur.

**7.** Procédé selon la revendication 4, **caractérisé en ce que** le couple de traînée du moteur est déterminé en fonction d'une vitesse de rotation du moteur.

**8.** Procédé selon l'une des revendications 2 à 7, **caractérisé en ce que** le couple de marche à vide du moteur est déterminé en particulier en fonction de l'angle du clapet d'étranglement par référence à une formule ou à un champ caractéristique.

**9.** Procédé selon l'une des revendications 1 à 8, **caractérisé en ce que** dans le cas de véhicules à transmission automatique, le couple moteur du véhicule est déterminé en tenant compte des propriétés d'un convertisseur.

**10.** Procédé selon les revendications 9 et 6, **caractérisé en ce que** la propriété du convertisseur est prise en compte après formation de la différence entre la vitesse de rotation réelle et la vitesse de rotation estimée du moteur, en particulier en fonction d'un diagramme caractéristique ou d'une formule.

**11.** Procédé selon la revendication 9, **caractérisé en ce que** la propriété du convertisseur est déterminée en fonction de la vitesse de rotation estimée du moteur et au moins d'une vitesse de rotation d'une roue à l'aide d'un modèle, ce modèle fournissant aussi le couple moteur du véhicule.

**12.** Procédé selon la revendication 11, **caractérisé en ce que** le couple de la pompe est déterminé aussi à l'aide du modèle de la propriété du convertisseur, et la vitesse de rotation estimée du moteur est déterminée aussi en fonction du couple de la pompe.

**13.** Dispositif pour déterminer le couple moteur d'un véhicule au démarrage d'un véhicule, comportant un modèle du comportement de marche à vide du moteur à l'état non chargé, un comparateur pour des valeurs de sortie du modèle et des valeurs de mesure correspondantes ou des valeurs dérivées de celles-ci ainsi qu'un dispositif de détermination pour déterminer le couple moteur du véhicule en fonction du résultat de la comparaison.

**14.** Dispositif selon la revendication 13, **caractérisé par**

un premier dispositif de détermination (101, 102) pour déterminer le couple de marche à vide du moteur (MMotor),

un deuxième dispositif de détermination (103-108) pour déterminer une vitesse de rotation estimée du moteur (NMotorBeo) à partir du couple de marche à vide du moteur,

un troisième dispositif de détermination (112) pour déterminer la vitesse de rotation réelle du moteur (NMotorMess) à l'aide de valeurs mesurées, et

un quatrième dispositif de détermination (109, 110, 114) pour déterminer le couple moteur du véhicule (MKorrBeo) en fonction de la vitesse de rotation réelle et de la vitesse de rotation estimée du moteur.

**15.** Dispositif selon la revendication 14, **caractérisé en ce que** le troisième dispositif de détermination détermine la vitesse de rotation estimée du moteur également en fonction du couple moteur du véhicule.

**16.** Dispositif selon la revendication 15, **caractérisé en ce que** le troisième dispositif de détermination comporte

un cinquième dispositif de détermination (103) pour déterminer un couple de traînée du moteur (MSchlepp);

un additionneur (104) pour l'addition avec signe correct de couples agissant sur le moteur, et

un calibreur (105, 108), un organe de temporisation (106) et un intégrateur (107).

**17.** Dispositif selon la revendication 16, **caractérisé par** un autre organe de temporisation (115) de premier ordre ou d'ordre supérieur dans le troisième dispositif de détermination.

**18.** Dispositif selon l'une des revendications 14 à 17, **caractérisé en ce que** le quatrième dispositif de détermination comporte un soustracteur (109) qui forme la différence entre la vitesse de rotation réelle et la vitesse de rotation estimée du moteur.

**19.** Dispositif selon la revendication 16, **caractérisé en ce que** le cinquième dispositif de détermination détermine le couple de traînée du moteur en fonction d'une vitesse de rotation du moteur.

**20.** Dispositif selon l'une des revendications 14 à 19, **caractérisé en ce que** le couple moteur est déterminé en particulier en fonction de l'angle du clapet d'étranglement par référence à une formule ou à un diagramme caractéristique.

**21.** Dispositif selon l'une des revendications 14 à 20, **caractérisé en ce qu'**il compote un modèle de convertisseur (301, 501-502) pour les véhicules à transmission automatique, et le couple moteur du véhicule est déterminé en tenant compte d'une sortie du modèle du convertisseur.

**22.** Dispositif selon les revendications 21 et 18, **caractérisé en ce que** le modèle du convertisseur (301) agit en fonction de la différence entre la vitesse de rotation réelle et la vitesse de rotation estimée du moteur et en particulier en fonction d'un diagramme caractéristique ou d'une formule.

**23.** Dispositif selon la revendication 21, **caractérisé en ce que** le modèle de convertisseur reçoit la vitesse de rotation estimée du moteur (NMotorBeo) et au moins une vitesse de rotation d'une roue (NRad), et fournit le couple moteur du véhicule.

**24.** Dispositif selon la revendication 23, **caractérisé en ce que**

le modèle du convertisseur fournit aussi le couple de la pompe (MPumpe), et

le troisième dispositif de détermination détermine la vitesse de rotation estimée du moteur également en fonction du couple de la pompe.

**25.** Procédé pour déterminer une grandeur à cause externe, entraînant ou freinant un véhicule, en particulier un couple de ce type, selon l'une des revendications 1 à 12, **caractérisé par** les étapes suivantes :

détermination à partir d'un modèle du comportement de conduite du véhicule,

comparaison des valeurs de sortie du modèle à des valeurs de mesure correspondantes ou des valeurs dérivées de celles-ci, et

détermination de la grandeur à cause externe en fonction du résultat de la comparaison.

**26.** Procédé selon la revendication 25, **caractérisé par** les étapes suivantes :

détermination de couples internes entraînant ou freinant le véhicule, ou de forces,

détermination d'une vitesse estimée du véhicule à partir des couples déterminés ou des forces,

détermination de la vitesse réelle du véhicule à l'aide de valeurs mesurées, et

détermination de la grandeur à cause externe, en particulier du couple, en fonction de la vitesse réelle et de la vitesse estimée du véhicule.

27. Dispositif pour déterminer une grandeur à cause externe, entraînant ou freinant un véhicule, en particulier un couple de ce type, selon l'une des revendications 13 à 24, **caractérisé par** un modèle (31-36) du comportement de conduite du véhicule, un comparateur (25) pour des valeurs de sortie du modèle et des valeurs de mesure correspondantes ou des valeurs dérivées de celles-ci, et

un dispositif (25) pour déterminer la grandeur à cause externe en fonction du résultat de la comparaison.

28. Dispositif selon la revendication 27, **caractérisé par**

un premier dispositif de détermination (10-12) pour déterminer des couples internes, entraînant ou freinant le véhicule ou des forces (MMotAchse, MBremAchse, MFahrWid),

un deuxième dispositif de détermination (31-36) pour déterminer une vitesse estimée du véhicule (VMod) à partir de couples déterminés ou de forces,

un troisième dispositif de détermination (14) pour déterminer la vitesse réelle du véhicule (VRef-Filt) à l'aide de valeurs mesurées, et

un quatrième dispositif de détermination (22, 25) pour déterminer la grandeur à cause externe (MKorreltturBeo), en particulier un couple, en fonction de la vitesse réelle et de la vitesse estimée du véhicule.

29. Procédé pour faciliter le démarrage en côte d'un véhicule, selon l'une des revendications 1 à 12, **caractérisé par** les étapes suivantes :

détermination du couple moteur du véhicule pendant le démarrage,

détermination de couples à cause externe,

action sur le frein de service et/ou le frein de stationnement, et/ou le couple moteur en fonction des couples déterminés.

30. Procédé selon la revendication 29, **caractérisé en ce que**

le couple moteur du véhicule est déterminé selon l'une des revendications 1 à 12,

le couple à cause externe est déterminé selon la revendication 25 ou 26,

le couple de freinage est déterminé, et

on agit sur le frein de service et/ou le frein de stationnement de manière que la somme du couple de freinage et du couple moteur du véhicule soit supérieure au couple à cause externe.

31. Dispositif pour faciliter le démarrage en côte d'un véhicule, selon l'une des revendications 13 à 24, **caractérisé par**

un dispositif (701) pour déterminer le couple moteur du véhicule pendant le démarrage,

un dispositif (702) pour déterminer des couples à cause externe, et

un dispositif (704) pour agir sur le frein de service et/ou le frein de stationnement et/ou le couple moteur en fonction des couples déterminés.

32. Dispositif selon la revendication 31, **caractérisé en ce que**

le dispositif de détermination (701) du couple moteur du véhicule est réalisé selon l'une des revendications 13 à 24,

le dispositif de détermination (702) du couple à cause externe est réalisé selon la revendication 27 ou 28,

le dispositif d'influence (704) agit sur le frein de service (707) et/ou le frein de stationnement (708) de telle sorte que la somme du couple de freinage et du couple moteur du véhicule soit supérieure au couple à cause externe.

Fig. 1

Fig. 2

Fig. 3

Fig. 4

EP 1 023 546 B1

Fig. 5

EP 1 023 546 B1

Motor Wandler Getriebe

MM MPumpe MTurbine = MGetriebe MAntrieb
NMotor NPumpe NTurbine = NGetriebe NRad

Fig. 6

VRefFilt → **Fahrwiderstände** —10

MFohrWid

PIst → **Bremsenmodell** —11

MBremsAchse

AlphaIst →
VRefFilt → **Motor-/Getriebe-Modell**
NMotor →

MMotAchse

**Beobachter**

MIst (SummeM) geschätzt

VRefFilt

12    13    14

Fig.7

EP 1 023 546 B1

Fig. 8

MGes → | 31. 1/Radius/Masse | → | 32. Integrator | → ○ 33 → | 34. T1INV | → | 35. Integrator | → VMod

36

## Fig. 9

$r_R$, $\alpha$, $\alpha$, $F_T$, $F_G$, $F_N$

$M_H$ $M_M$ $M_B$

## Fig. 10

Fig. 11